# EUROPÄISCHE PATENTSCHRIFT

(11) **EP 0 958 122 B1**
(45) Veröffentlichungstag und Bekanntmachung des Hinweises auf die Patenterteilung: **07.05.2003**
(21) Anmeldenummer: 98901241.4
(22) Anmeldetag: 03.02.1998
(51) Int. Cl.: B29C 47/34, B65G 15/14

(54) **EINZELRAUPE, INSBESONDERE FÜR ABZUGSVORRICHTUNG, SOWIE ABZUGSVORRICHTUNG FÜR LÄNGLICHE BAUTEILE**
INDIVIDUAL CATERPILLAR, IN PARTICULAR FOR TAKE-OFF DEVICES, AND TAKE-OFF DEVICE FOR ELONGATE COMPONENTS
CHENILLE INDIVIDUELLE DESTINEE A DES DISPOSITIFS D'EVACUATION, ET DISPOSITIFS D'EVACUATION POUR ELEMENTS ALLONGES

(30) Priorität: 06.02.1997 AT 18497
(43) Veröffentlichungstag der Anmeldung: 24.11.1999
(73) Patentinhaber: Greiner Extrusionstechnik GmbH, 4550 Kremsmünster (AT)
(72) Erfinder: BAUMGARTNER-PICHELSBERGER, Herbert, a-4553 Schlierbach 159 (AT)
(74) Vertreter: Secklehner, Günter, Dr.
(86) Internationale Anmeldenummer: AT9800022
(87) Internationale Veröffentlichungsnummer: WO98034774

(56) Entgegenhaltungen:
- DE-A- 2 456 830
- DE-A- 4 129 461
- US-A- 5 330 595

## Beschreibung

Die Erfindung betrifft eine Abzugsvorrichtung mit an einem Grundrahmen abgestützten Oberraupe und Unterraupe, wie diese im Oberbegriff des Anspruches 1 beschrieben ist.

Eine Abzugsvorrichtung für längliche Bauteile ist aus der US 5,330,595 A bekannt geworden, welche eine Oberraupe und eine Unterraupe umfaßt, die an einem Grundrahmen abgestützt sind. Diese beiden Raupen weisen jeweils Fördermittel auf, welche durch ein endlos umlaufendes Förderorgan gebildet sind und durch diesen zugeordneten sowie voneinander distanzierten Umlenkrollen umgelenkt werden. Die Fördermittel für die länglichen Bauteile sind durch endlos umlaufende Preßbänder gebildet. Zwischen den Umlenkrollen sind Einzelführungsrahmen angeordnet, welche mittels Verstellantrieben an die vom länglichen Bauteil abgewandte Seite des Fördermittels angedrückt werden. Dabei sind die Verstellantriebe für die Einzelführungsrahmen am gemeinsamen Grundrahmen abgestützt. Weiters weisen die Einzelführungsrahmen auf der dem Fördermittel zugewandten Seite Führungslemente in Form von stationären Rollen auf, welche eine linienförmige Abstützung des Fördermittels im Bereich der Rollen der Einzelführungsrahmen bewirken. Durch die beidseitige Anordnung der Einzelführungsrahmen zu den Fördermitteln in dem dem Bauteil zugewandten Bereich wird eine beidseitige Anpreßkraft auf den Bauteil erzielt. Eine Anpassung an unterschiedliche Betriebszustände konnte nicht in allen Anwendungsfällen erfolgen.

Eine weitere Vorrichtung zum Abziehen von Extrusionsgut ist aus der DE 24 56 830 A1 bekannt geworden, welche eine an einem Grundrahmen abgestützte Oberraupe sowie Unterraupe umfaßt. Die beiden Raupen weisen jeweils endlos umlaufende Fördermittel auf, welche an zwei voneinandcr distanzierten Umlenkrollen umgelenkt werden. Zwischen den Umlenkrollen ist ein Halterahmen vorgesehen, an welchem mehrere hintereinander angeordnete, das Fördermittel abstützende. Kettenritzel über eine Kolbenanordnung und einem gemeinsamen Hydraulikbett in diesem abgestützt sind. Durch das in sich geschlossene Hydraulikbett kann eine selbsttätige Einstellung der Kettenritzel an eine sich ändernde Querschnittsabmessung des durchlaufenden Abzugsgutes erfolgen. Eine gleichmäßige Abzugskraft während unterschiedlicher Betriebszustände konnte dabei nicht in allen Anwendungsfällen erzielt werden, da zwischen den unmittelbar hintercinander angeordneten Kettenritzeln eine große Relativverstellung ermöglicht wird.

Eine andere Abzugsvorrichtung zum kontinuierlichen Abziehen eines extrudierten Stranges ist aus der DE 41 29 461 A der gleichen Anmelderin bekannt geworden, welche durch zwei an gegenüberliegenden Oberflächen des abzuziehenden Stranges anliegenden und mit einem Antrieb gekuppelten Raupen gebildet ist und diese an einem Maschinengestell abgestützt sind. Die beiden Raupen weisen endlos umlaufende Fördermittel auf, welche in ihrer Eingriffsstellung mit dem abzuziehenden Gegenstand derart ausgebildet sind, daß sie gegeneinander vorragende Stützelemente aufweisen, welche sich in der geradlinigen Strecklage überdecken und aufeinander abstützen. Dadurch wird ein Kippen der einzelnen Kettenglieder gegeneinander vermieden und so eine ebenflächige Auflage der Stollen an dem abzuziehenden Gegenstand erzielt. Zur Abstützung des Zugelements zwischen den Umlenkrollen ist ein balkenförmiger Tragholm vorgesehen, welcher über Verstelleinrichtungen an dem die Raupen lagernden Maschinengestell abgestützt ist.

Weiters sind bereits auch verschiedene Abzugsvorrichtungen, die üblicherweise auch als Raupenabzüge bezeicbnet werden, bekannt geworden. Derartige Raupenabzüge dienen dazu, um die aus einem Extruder austretenden Profile bzw. Gegenstände aus plastifiziertem Kunststoff nach ihrer Kalibrierung und Abkühlung abzuziehen, sodaß es zu keinem Stau beim nachfolgenden noch plastifizierten Material im Bereich der Kalibrierung bzw. Kühlstrecke kommt. Der Raupenabzug dient dazu, die beim Durchtreten durch die Kaliber und die Kühlvorrichtungen auftretenden Reibungswiderstände zu überwinden. Um eine gleichmäßige Qualität der extrudierten Gegenstände sicherzustellen, ist es erforderlich eine möglichst gleichmäßige Abzugsgeschwindigkeit einzuhalten. sodaß sich die extrudierten Gegenstände mit möglichst gleichmäßiger Geschwindigkeit durch den Kaliber bzw. durch die Kühlvorrichtungen bewegen, sodaß keine zusätzlichen Spannungen in die Gegenstände eingebracht werden. Dabei ist es wesentlich, daß beim Abzug der Profile eine exakt gleichmäßige Geschwindigkeit im Bereich der Oberraupe und der Unterraupe eingehalten wird, um ein Verziehen des Profils zu vermeiden. Andererseits ist es wesentlich, während des Anlaufens des Gegenstandes, bei welchem dieser noch nicht seine endgültige Querschnittsform aufweist, zumindest eine der beiden Raupen des Raupenabzuges so zu steuern bzw. so gelenkig auszubilden, daß sie sich mit zunehmender Herstellung der endgültigen Querschnittsform in der Höhe sowie gegebenenfalls Schräglage an das aus dem Kühlbad austretende harte Profil anpassen kann.

Der vorliegenden Erfindung liegt die Aufgabe zugrunde, cine Abzugsvorrichtung zu schaffen, die sich an die unterschiedlichsten Betriebszustände während eines Extrusionsprozesses rasch und mit hoher Eingriffsicherheit anpassen kann.

Diese Aufgabe der Erfindung wird durch die Merkmale im Kennzeichenteil des Anspruches 1 gelöst. Vorteilhaft ist hierbei, daß durch die Führung des Fördermittels durch mehrere Einzelführungsrahmen sich das Fördermittel über die Länge der Einzelraupe individuell an die unterschiedlichen Zustände des Profils von den ersten Strängen bis zum Aufbau des vollen Profilquerschnitts anpassen kann. In nicht vorhersehbarer, überraschender Weise wird durch eine derartige Konstruktion aber auch erreicht, daß sich die einzelnen Einzelraupen bei paralleler Extrusion von mehreren parallel zueinander laufenden Gegenständen an unterschiedliche Höhen dicser Gegenstände bzw. unterschiedlich dicke Abschnitte dieser Gegenstände anpassen können. Vorteilhaft ist dabei auch, daß eine einfache Anpassung der einzelnen Abzugsraupen zueinander auf unterschiedliche Anforderungen selbsttätig erfolgt. Weiters wird dadurch auch eine noch bessere und optimalere sowie vielfältigere Anpassung an unterschiedliche Bauteilausbildungen ermöglicht. Dies ist vor allem bei mehreren nebeneinander angeordneten oder gestuft ausgebildeten Bauteilen von besonderem Vorteil. Weiters kann sich dadurch das Fördermittel über die Länge der Einzelraupe individuell und noch besser an die unterschiedlichen Höhen bzw. Zustände des Profils von den ersten Strängen bis zum Aufbau des vollen Profilquerschnitts bedingt durch die Anordnung der Einzelführungsrahmen anpassen. Dies erfolgt durch die bessere höhenmäßige Einstellung bzw. Justierung der einzelnen Einzelführungsrahmen gegenüber dem Basisrahmen. Vorteilhaft ist dabei auch, daß nur einer der Einzelführungsrahmen in seiner Lage gegenüber dem Basisrahmen in Abzugsrichtung gehaltert werden muß, um eine gegenseitige Verlagerung in Abzugsrichtung zu verhindern. Weiter wird dadurch auch im Übergangsbereich zwischen den einzelnen Einzelführungsrahmen ein stufenfreier sowie ruckfreier Übergang sowie eine einwandfreie Führung des umlaufenden Fördermittels erzielt. Durch den gemeinsamen Basisrahmen ist eine gleichmäßigere Andrückkraft der einzelnen Einzelraupen in der Ober- und /oder Unterraupe auf den Bauteil erzielbar. Weiters kann dadurch auch eine Öffnungsbewegung der Oberraupe in Bezug zum Gegenstand bzw. dem Grundrahmen erreicht werden.

Durch die Ausbildung nach Anspruch 2 ist es möglich, eine noch feinfühligere höhenmäßige Einstellung bzw. Justierung der einzelnen Einzelführungsrahmen gegenüber dem Basisrahmen zu erzielen, wobei zusätzlich noch höhere und vor allem gleichmäßigere Andrückkräfte auf den abzuziehenden Gegenstand erzielbar sind.

Durch die Weiterbildung nach Anspruch 3 wird erreicht, daß durch die Anordnung der Abstützrolle bei einer winkeligen Stellung der Einzelführungsrahmen eine gleichmäßi-5 ge Anpreßkraft erzielt bzw. über die ganze Länge beibehalten werden kann. Zusätzlich wird dadurch auch noch der Verschleiß der Führungsleisten in deren Ein- bzw. Auslaufseite verringert.

Vorteilhaft ist auch eine Ausbildung nach Anspruch 4, da dadurch auf die zusätzliche Anordnung von eigenen Spannvorrichtungen für das bzw. die Fördermittel verzichtet werden kann. Weiters wird auch noch ein Längenausgleich in den einzelnen Bewegungszuständen der Einzelführungsrahmen gegenüber dem Basisrahmen gewährleistet.

Gemäß einer Ausbildung, wie im Anspruch 5 beschrieben, wird auch der Verschleiß der Führungsleisten in deren Ein- bzw. Austrittsbereich zu den Umlenkrollen verringert, wodurch auch noch geringere Reibunskräfte zu überwinden und dadurch geringere Antriebsleistungen aufzubringen sind.

Dabei erweist sich eine Ausgestaltung nach Anspruch 6 vorteilhaft, da die Führungselemente aus einem Material mit geringerem Reibwert gebildet sein können, wodurch eine leichtgängige Gleitbewegung bei einer zusätzlichen Führung des Fördermittels in Abzugsrichtung erzielbar ist. Zusätzlich sind auch noch höhere und vor allem gleichmäßigere Andrückkräfte auf den abzuziehenden Gegenstand erzielbar.

Nach einer vorteilhaften Weiterbildung gemäß Anspruch 7 wird eine Anlage und ein damit verbundenes Scheuern des Fördermittels am Basisrahmen im ungünstigsten bzw. weitesten Verstellzustand der Einzelführungsrahmen gegenüber dem Basisrahmen gesichert verhindert. Weiters wird dadurch auch in diesem Abschnitt des Fördermittels sowohl eine Führung als auch eine Verminderung der gegenseitigen Reibung erzielt.

Bei der Ausgestaltung nach Anspruch 8 ist von Vorteil, daß dabei vorwiegend genormte bzw. standardmäßige Bauteile eingesetzt werden können, wodurch auch eine einfache Austauschbarkeit einzelner Bauteile ermöglicht wird. Weiters ist dabei ein einfacher Anbau von Andrückele- menten, wie z.B. Stollen, möglich. Zusätzlich wird dabei noch die Reibung zwischen dem abzuziehenden Bauteil und dem Förderorgan erhöht.

Von Vorteil ist aber auch eine Ausbildung nach Anspruch 9, da dadurch eine höhere Reibung und eine damit verbundene höhere Abzugskraft zwischen dem abzuziehenden Bauteil und dem Fördermittel erreicht wird.

Gemäß Anspruch 10 wird eine leichtere Handhabung bzw. eine einfachere Montage der Stollen am Fördermittel erzielt. Dadurch ist ein Wechsel einzelner Bauteile einfacher möglich, wobei auch ein Einsatz von Normteilen kostengünstig ist.

Bei der Ausbildung gemäß Anspruch 11 kann ein einfacher Ausgleich von unterschiedlichen Höhen am bzw. an den abzuziehenden Bauteilen erfolgen.

Möglich ist dabei auch eine Ausbildung nach Anspruch 12, da dadurch gleichmäßige Anpreßkräfte der Einzelführungsrahmen auf die abzuziehenden Bauteile aufbringbar sind.

Die Ausgestaltung nach Anspruch 13 ermöglicht einen selbsttätigen Ausgleich zwischen den einzelnen Zylinderkammern innerhalb des Gesamtsystems.

Vorteilhaft ist die Ausbildung nach Anspruch 14, da dadurch Überbelastungen der abzuziehenden Bauteile und damit verbundene Beschädigungen gesichert vermieden werden. Weiters werden dadurch auch die Verstellantriebe vor einer Überbeanspruchung sowie einer damit einhergehenden Beschädigung geschützt.

Von Vorteil ist aber auch eine Ausbildung nach Anspruch 15, da damit innerhalb des Gesamtsystems rasch ein einfacher Volumenausgleich zwischen den Verstellantrieben erfolgen kann.

Es ist aber auch eine Ausbildung wie im Anspruch 16 beschrieben möglich, da dadurch auftretende Leckverluste in den Verbindungsleitungen bzw. Zylinderkammern wiederum aufgefüllt werden können, wodurch innerhalb des Gesamtsystems stets gleiche Druckverhältnisse erzielhar sind. Weirers ist damit aber auch ein einfaches und vollständiges Entleeren des Druckme- diums in die Druckquelle vor allem bei Reparaturarbeiten möglich.

Nach einer vorteilhaften Weiterbildung gemäß Anspruch 17 kann bei der Anwendung sowohl im Einzelstrangverfahren als auch im Mehrstrangverfahren eine gleichmäßigere Abzugsbewegung erzielt werden.

Gemäß Anspruch 18 kann auf einfache Art und Weise eine flexible Anpassung auf die unterschiedlichsten Profile bzw. Profilquerschnitte sowohl im Einzeistrangverfahren als auch im Mehrstrangverfahren erfolgen.

Bei der Ausbildung gemäß Anspruch 19 können die einzelnen Einzelraupen jeweils unabhängig voneinander in Bezug zur vorgegebenen Abzugsgeschwindigkeit gesteuert werden, wodurch bei unterschiedlichen Profilquerschnitten und den sich dadurch ergebenden unterschiedlichen Extrusionsgeschwindigkeiten trotzdem ein einwandfreies Abzugsergebnis erzielbar ist.

Möglich ist dabei auch eine Ausbildung nach Anspruch 20, da bei einer Mehrfachanordnung von abzuziehenden Bauteilen zueinander eine gleichmäßige Abzugsgeschwindigkeit erzielt werden kann. Weiters kann bei gestuft ausgebildeten Einzelbauteilen ein Verzug in Abzugsrichtung während der Abzugsbewegung verhindert werden.

Die Ausgestaltung nach Anspruch 21 ermöglicht einen zusätzlichen Verstellweg des Basisrahmens gegenüber dem Grundrahmen, welcher in seiner Größe über den Verstellweg der einzel- nen Verstellantriebe der Einzelraupen in Bezug zum Basisrahmen hinausgeht.

Schließlich ist aber auch eine Ausbildung wie im Anspruch 22 beschrieben möglich, da dadurch zwischen den einzelnen Zylinderkammern der Verstellantriebe stets ein rascher Volumenausgleich innerhalb des Gesamtsystems unter Beibehaltung eines gleichen Druckniveaus erfolgen kann und somit über die Längserstreckung des bzw. der Bauteile immer eine gleichmäßige Andrückkraft erzielbar ist.

Die Erfindung wird im nachfolgenden anhand der in den Zeichnungen gezeigten Ausführungsbeispiele näher erläutert.

Es zeigen:
- Fig. 1: eine erfindungsgemäß ausgebildete Einzelraupe mit mehreren hintereinander angeordneten Einzelführungsrahmen in Seitenansicht und schematisch vereinfachter Darstellung;
- Fig. 2: die Einzetraupe nach Fig. 1 in Seitenansicht mit zum Basisrahmen verlagerter Stellung der Einzelführungsrahmen;
- Fig. 3: eine mögliche Ausbildung einer Abzugsvorrichtung mit mehreren, die Oberraupe bildenden, Einzelraupen in Stirnansicht geschnitten und schematisch vereinfachter Darstellung;
- Fig. 4: eine weitere mögliche Ausbildung einer Abzugsvorrichtung mit sowohl die Oberraupe, als auch die Unterraupe bildenden Einzelraupen in Stirnansicht geschnitten und schematisch vereinfachter Darstellung;
- Fig. 5: eine weitere mögliche Abzugsvorrichtung mit Oberraupe und Unterraupe in Seitenansicht und schematisch vereinfachter Darstellung;
- Fig. 6: eine weitere und gegebenenfalls für sich eigenständige Ausbildung einer Einzelraupe, in Seitenansicht und schematisch vereinfachter Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Weiters können auch Einzelmerkmale aus den gezeigten, unterschiedlichen Ausführungsbeispielen für sich eigenständige, erfindungsgemäße Lösungen darstellen.

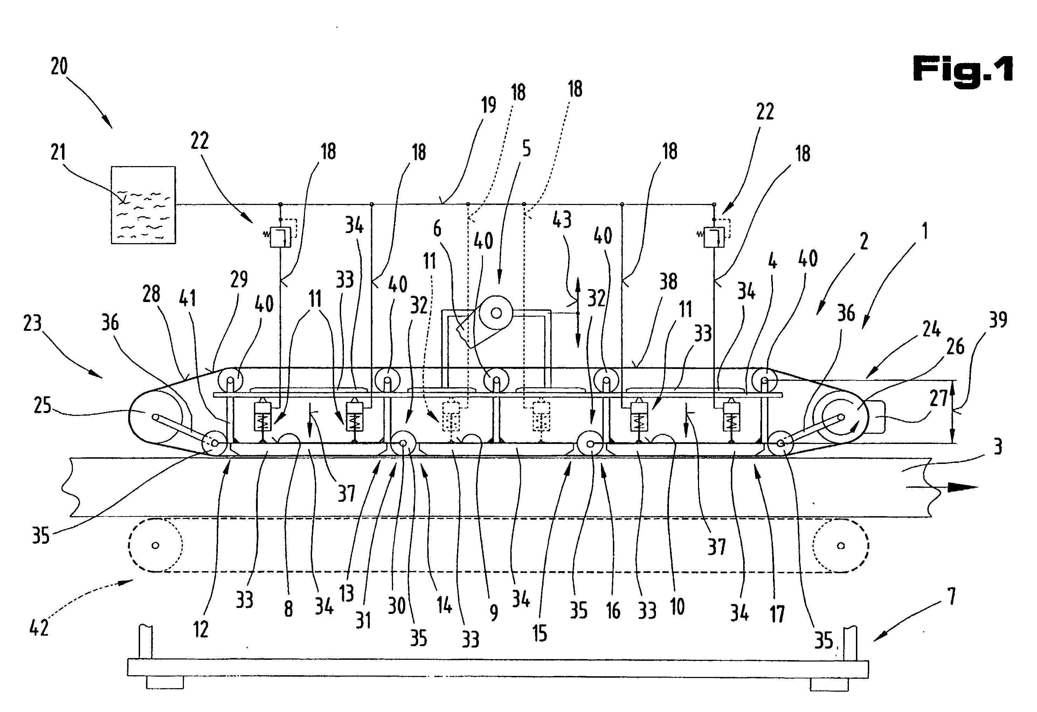

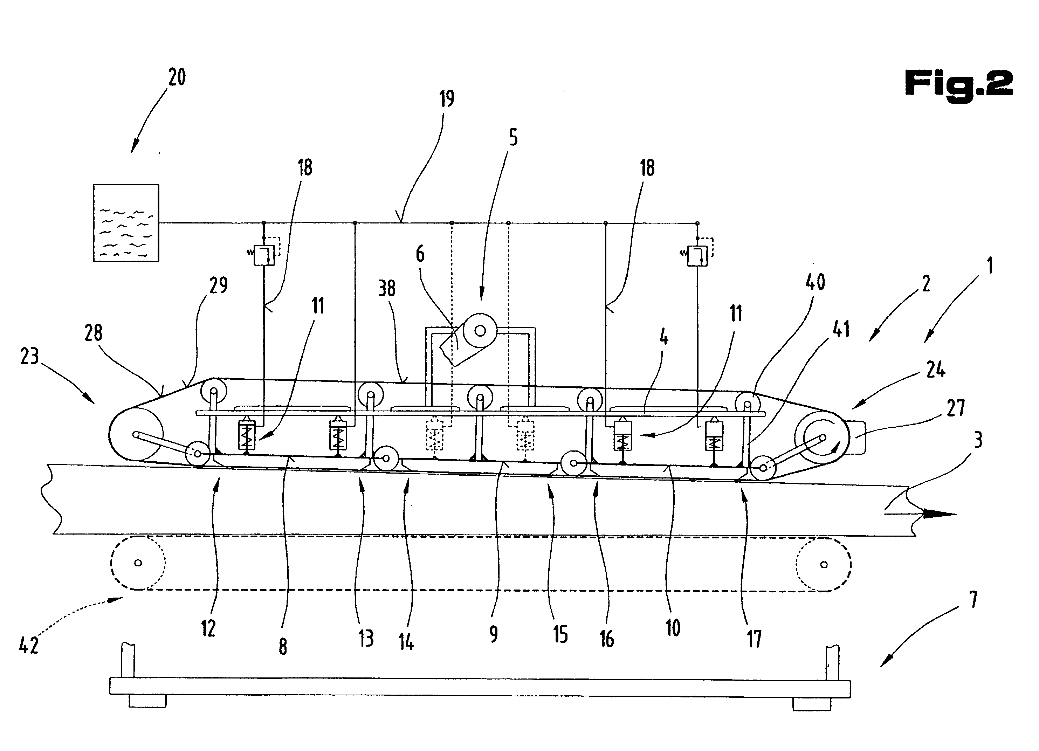

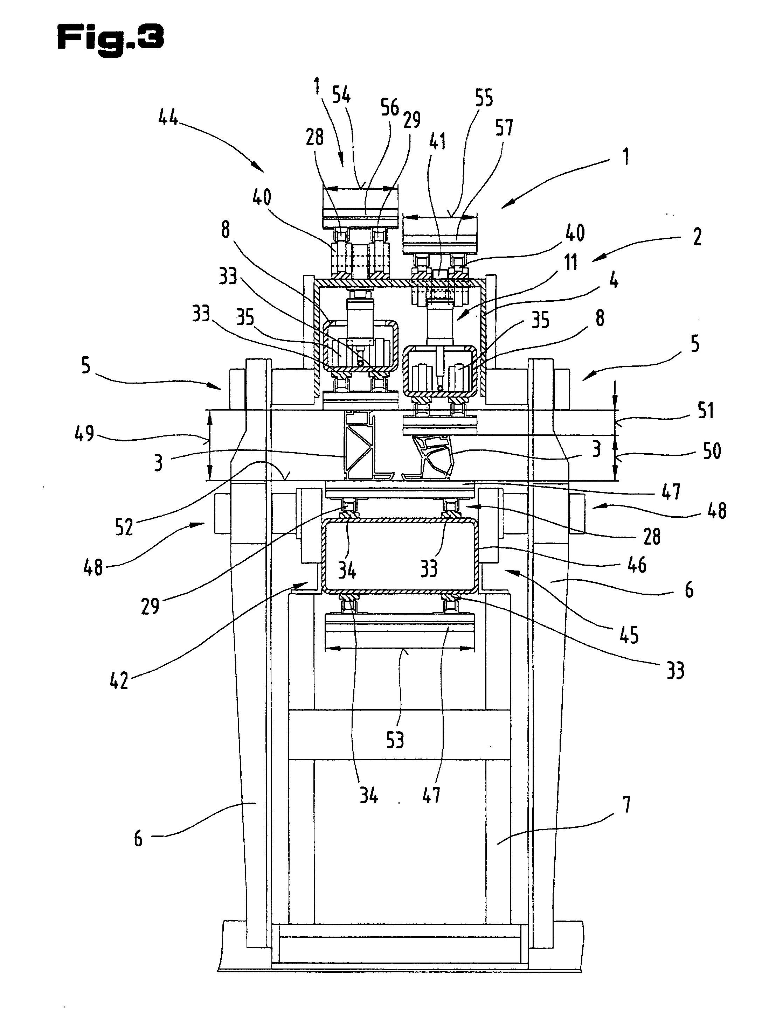

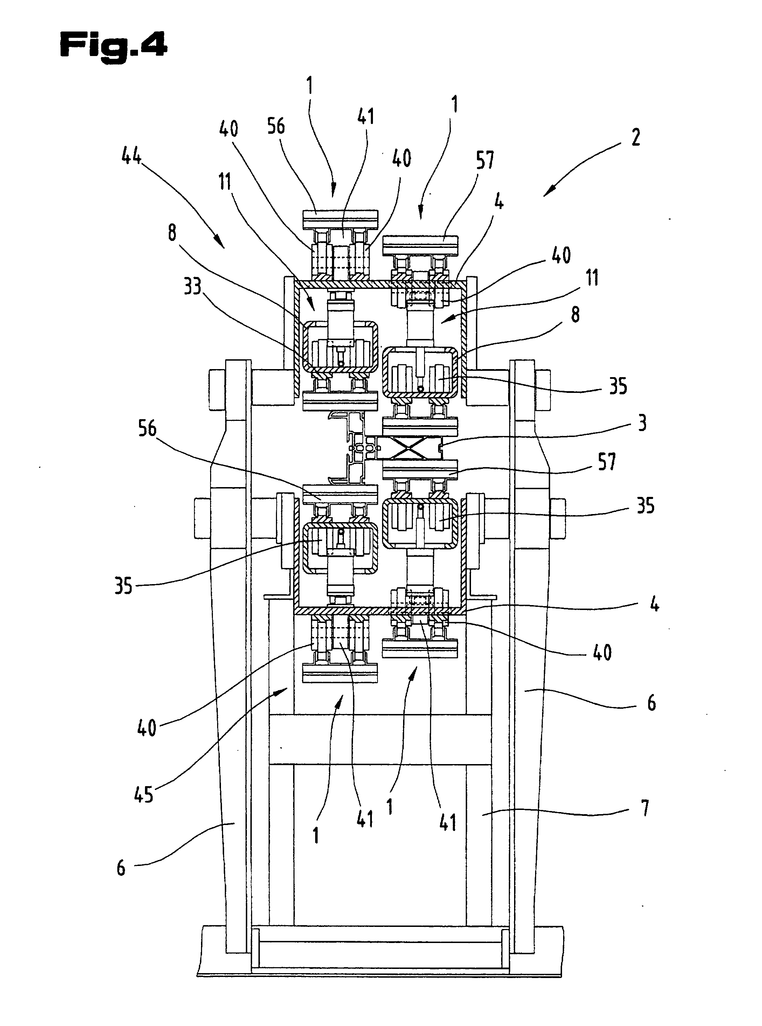

In den Fig. 1 und 2 ist eine Einzelraupe 1 einer Abzugsvorrichtung 2 zur Bewegung eines länglich ausgebildeten Bauteils 3 relativ gegenüber einem Basisrahmen 4 gezeigt. Zur besseren Veranschaulichung der Wirkungsweise der die Einzelraupe bildenden Bauteile wurde eine schematisch vereinfachte Darstellung gewählt, um dies besser beschreiben zu können.

Der Basisrahmen 4 ist über eine vereinfacht dargestellte Lagervorrichtung 5 sowie einem mit der Lagervorrichtung 5 schwenkbar verbundenen Schwenkarm 6 gegenüber einem nicht näher dargestellten Grundrahmen 7 der Abzugsvorrichtung 2 relativ zu diesem gehaltert. Die detaillierte Beschreibung der relativen Verstellung des Basisrahmens 4 bzw. der Einzelraupe 1 gegenüber dem Grundrahmen 7 erfolgt auch noch in den nachfolgenden Figuren. Der Basisrahmen 4 ist bevorzugt parallel zur Bewegungsrichtung des Bauteils 3 angeordnet und, wie bereits zuvor beschrieben, relativ zu diesem sowohl höhenmäßig als auch winkelig verstellbar.

Weiters kann die Einzelraupe 1 mehrere hintereinander angeordnete Einzelführungsrahmen 8 bis 10 umfassen, welche mittels schematisch angedeuteter Verstellantriebe 11 gegenüber dem Basisrahmen 4 zumindest in zur Bewegungsrichtung des Bauteils 3 senkrechter Richtung selbsttätig einstellbar gelagert bzw. festlegbar sind. Dabei beträgt der Verstellweg zwischen dem Basisrahmen 4 und den Einzelführungsrahmen 8 bis 10 zwischen 10 mm und 150 mm, bevorzugt zwischen 30 mm und 70 mm. In der Betriebsstellung sind die einzelnen Verstellantriebe 11 in etwa um deren halben Hub ausgefahren. Die Anzahl der Einzelführungsrahmen 8 bis 10 hängt von der jeweiligen Ausführungsform ab und kann ausgehend von einem Einzelführungsrahmen jede beliebige Zahl sein.

So ist es beispielsweise möglich, jedem der einzelnen Einzelführungsrahmen 8 bis 10 in jeweils ihren Endbereichen 12 bis 17 zumindest einen Verstellantrieb 11 zuzuordnen. Es ist aber selbstverständlich auch möglich, jedem Einzelführungsrahmen 8 bis 10 nur einen einzigen Verstellantrieb 11 im Mittelbereich des selben zuzuordnen. Der besseren Übersichtlichkeit halber wurde auf eine Darstellung von Halteelementen zwischen dem Basisrahmen 4 und den Einzelführungsrahmen 8 bis 10 verzichtet.

Jeder der einzelnen Verstellantriebe 11 kann beispielsweise über eine eigene Verbindungsleitung 18 mit einer gemeinsamen Verteilleitung 19 in Verbindung stehen. Diese Verteilleitung 19 kann an einer eigenen Druckquelle 20 angeschlossen bzw. mit dieser verbunden sein, in welcher ein Medium 21 unter einem voreinstellbaren Druck bevorratet ist. Weiters ist es möglich, wie dies nur bei einigen Verbindungsleitungen 18 angedeutet ist, diesen jeweils ein eigenes Überdruckventil 22 zuzuordnen, um mögliche Druckspitzen innerhalb der Verbindungsleitungen 18 bzw. der Verteilleitung 19 zu vermeiden. Dabei kann die Durchflußrichtung des Überdruckventils 22 je nach Wirkungsweise des Verstellantriebes 11 frei gewählt werden. Es ist aber auch möglich, den Verstellantrieben 11 jeweils ein Überdruckventil 22 zuzuordnen.

Wesentlich dabei ist, daß über die gesamte Längserstreckung der Einzelraupe 1 mittels der Verstellantriebe 11 bzw. der Einzelführungsrahmen 8 bis 10 auf den hindurchzubewegenden Bauteil 3 eine gleichmäßige Andrückkraft ausgeübt werden kann, um so den Bauteil im Überdeckungsbereich mit der Einzelraupe 1 einer gleichmäßigen Druckbelastung auszusetzen und so die nötige Abzugskraft aufzubringen.

Beidseits der Längserstreckung des Basisrahmens 4 ist jeweils eine Umlenkvorrichtung 23, 24, beispielsweise in Form von Umlenkrollen 25, 26, angeordnet. Eine dieser Umlenkvorrichtungen kann beispielsweise als Antrieb 27 für ein beispielsweise endlos ausgebildetes Fördermittel 28 ausgebildet sein, wie dies bei der Umlenkrolle 26 schematisch angedeutet ist. Ein das Fördermittel 28 bildendes Förderorgan 29 kann beispielsweise durch eine Gliederkette oder eine Rundkette oder dergleichen gebildet sein. Weiters ist es aber auch möglich, daß einzelne Glieder der Gliederkette selbst durch Stollen gebildet sind, welche über Schwenkgelenke untereinander zu dem Fördermittel 28 verbunden sind. Unabhängig davon ist es aber auch möglich, daß an den einzelnen Gliedern der Gliederkette einzelne Stollen angeordnet sind, wobei diese zuletzt beschriebenen Ausführungsformen in den nachfolgenden Figuren noch detaillierter beschrieben werden.

Weiters ist es aber auch möglich die einzelnen hintereinander angeordneten Einzelführungsrahmen 8 bis 10 an den einander jeweils zugewandten Endbereichen 13, 14 bzw. 15, 16 um eine, die den Verstellantrieb 11 aufnehmende Ebene senkrechte Achse 30 aufweisende Gelenkanordnung 31, wie beispielsweise ein Schwenkgelenk 32, miteinander zu verbinden. Dadurch ist es möglich, wie dies in der Fig. 1 angedeutet ist, nur dem in Bewegungsrichtung ersten Einzelführungsrahmen 8 sowie dem in Bewegungsrichtung letzten Einzelführungsrahmen 10 die notwendigen Verstellantriebe 11 zuzuordnen, wodurch der mittlere Einzelführungsrahmen 9 bedingt durch die gelenkige Verbindung mit den beiden benachbarten Einzelführungsrahmen 8 bzw. 10 ebenfalls relativ zum Basisrahmen 4 in senkrechter Richtung zur Bewegungsrichtung des Bauteils 3 verstellbar ist.

Um eine optimale Andrückkraft der einzelnen Einzelführungsrahmen 8 bis 10 an eine der Oberflächen des Bauteils 3 zu gewährleisten, ist zwischen den jeweiligen Endbereichen 12 bis 17 der einzelnen Einzelführungsrahmen 8 bis 10 jeweils ein eigenes Führungselement 33, wie z.B. eine Führungsleiste 34, für das Fördermittel 28 bzw. das Förderorgan 29 angeordnet. Um bei einer winkeligen Stellung der einzelnen Einzelführungsrahmen 8 bis 10 zueinander einen ruckfreien bzw. störungsfreien Übergang des Förderorgans 29 zwischen den einander zugewandten Endbereichen 13, 14 bzw. 15, 16 und den auf den Einzelführungsrahmen 8 bis 10 angeordneten Führungselementen 33 zu gewährleisten, ist im Bereich der Gelenkanordnung 31 zumindest eine Abstützrolle 35 für das Fördermittel 28 angeordnet.

Wie weiters aus dieser Darstellung zu ersehen ist, sind die Einzelführungsrahmen 8 bis 10 in Bewegungsrichtung des Bauteils 3 gesehen, zwischen den beiden Umlenkvorrichtungen 23, 24 bzw. den Umlenkrollen 25, 26 angeordnet bzw. zwischen diesen eingeschlossen. Um einen gleichmäßigen Einlaufwinkel des Fördermittels 28 zwischen der ersten Umlenkrolle 25 und dem, diesen zugewandten Endbereich 12 des Einzelführungsrahmen 8, sowie der weiteren Umlenkrolle 26 und dem diesen zugewandten Endbereich 17 des Einzelführungsrahmens 10 zu gewährleisten, kann in beiden Endbereichen 12, 17 ebenfalls zumindest eine Abstützrolle 35 zur Abstützung bzw. Führung des endlosen Förderorgans 29 angeordnet sein, sowie die einzelnen Umlenkrollen 25, 26 über eigene Haltearme 36 mit den Einzelführungsrahmen 8, 10 winkelig voreinstellbar zu diesen gehaltert sein. Dadurch ist gewährleistet, daß bei einer relativen Verstellung der Einzelführungsrahmen 8 bis 10 gegenüber dem Basisrahmen 4 auch die beiden Umlenkvorrichtungen 23, 24 relativ zum Basisrahmen 4 verstellt werden, wodurch in dem dem Bauteil 3 zugewandten Bereich der Einzelraupe 1 in etwa stets die gleichen An- bzw. Ablaufwinkel des Fördermittels 28 im Bezug zur Bewegungsrichtung des Bauteils 3 gegeben sind. Es ist aber auch möglich, die Haltearme 36 am Basisrahmen 4 zu haltern, wobei jedoch bei vollständig eingefahrenen Verstellantrieben 11 das Förderorgan 29 nicht von den Führungselementen 33 abhebt.

Bei den hier gezeigten Verstellantrieben 11 handelt es sich beispielsweise um ZylinderKolbenanordnungen, welche mit den unterschiedlichsten Druckmitteln bzw. Medien 21, wie beispielsweise Öl, Luft, usw., beaufschlagt werden und z.B. durch einfach und/oder doppelt wirkende Zylinder gebildet sein können. Es sind aber selbstverständlich auch jede anderen Arten von Verstellantrieben 11, wie beispielsweise federnde Bälge mit Luft, Federbälge, Federvorrichtungen, elastische Zwischenglieder usw. möglich. Wie aus der Darstellung in den Fig. 1 und 2 zu ersehen ist, ist zumindest eine der im Kraftübertragungsweg zwischen dem Basisrahmen 4 und zumindest eines Einzelführungsrahmens 8 bis 10 angeordnete Zylinderkammer des Verstellantriebes 11 mit einem unter gleichem Druck stehenden Medium 21 beaufschlagt. Um jedoch eine gleichmäßige Kraftaufbringung der Andrückkraft - gemäß Pfeil 37 - zu erreichen, ist es vorteilhaft alle der für die Kraftübertragung notwendigen Zylinderkammern der Verstellantriebe 11 mit dem unter gleichem Druck stehenden Medium 21 zu beaufschlagen. Dadurch ist gesichert gewährleistet, daß keine Überbelastung bzw. Deformation des hindurchzuführenden Bauteils 3 erfolgt. Es wäre aber auch eine Ringleitung zwischen den einzelnen Verstellantrieben 11 und der gegebenenfalls zusätzlichen Anordnung der Druckquelle 20 möglich. Weiters sind sowohl geschlossene als auch offene Systeme für die Anspeisung der Verstellantriebe 11 möglich.

Zur Erzielung einer gleichmäßigen Vorspannung des endlosen Förderorgans 29 ohne der zusätzlichen Anordnung von eigenen Spannvorrichtungen ist es notwendig, den Umlaufweg des Förderorgans 29 konstant bzw. gleichmäßig auszubilden. Wesentlich dabei ist, daß bei einer relativen Verstellung der einzelnen Einzelführungsrahmen 8 bis 10 gegenüber dem Basisrahmen 4 nicht nur jener Abschnitt des Fördermittels 28, welcher unmittelbar dem Bauteil 3 zugewandt ist, in seiner Lage verändert wird, sondern gleichzeitig mit dieser relativen Verstellung auch ein Leertrum 38 auf der vom Bauteil 3 abgewandten Seite ebenfalls relativ zum Basisrahmen 4 mittels der Verstellantriebe 11, bevorzugt parallel, zu verlagern.

Während dieser Verstellbewegung jedes einzelnen der Einzelführungsrahmen 8 bis 10 ist es notwendig, den jeweiligen Abschnitt des Leertrums 38, welcher einem der Einzelführungsrahmen 8 bis 10 gegenüberliegend angeordnet ist, in einem gleichmäßigen Abstand 39 zum jeweiligen Einzelführungsrahmen 8 bis 10 zuzuführen. Dazu ist jedem der Einzelführungsrahmen 8 bis 10 zumindest ein Führungsorgan 40 zugeordnet, welches über ein Distanzstück 41 in dem vorbestimmbaren Abstand 39 an dem diesen zugeordneten Einzelführungsrahmen 8 bis 10 befestigt bzw. gehaltert ist. Zur zusätzlichen Führung bzw. Abstützung des Leertrums 38 auf der von den Einzelführungsrahmen 8 bis 10 abgewendeten Seite des Basisrahmens 4 können wiederum zur Führung bzw. Halterung des Fördermittels 28 bzw. des Förderorgans 29 eigene Führungselemente 33, wie z.B. die Führungsleisten 34, angeordnet sein. Dies ist vor allem dann von Bedeutung, wenn durch die einzelnen Verstellantriebe 11 die Einzelführungsrahmen 8 bis 10 auf eine gegenüber dem Basisrahmen 4 am weitest distanzierten Lage verbracht sind, um so ein Aufliegen des Förderorgans 29 an der von den Einzelführungsrahmen 8 bis 10 abgewendeten Seite des Basisrahmens 4 zu vermeiden. Durch die Anordnung dieser zusätzlichen Führungselemente 33 wird so auch eine gewisse Führung und damit eine verbundene Seitenstabilität des Leertrums 38 gegenüber dem Basisrahmen 4 erzielt.

Wie weiters aus der Darstellung in der Fig. 1 zu ersehen ist, weisen die einzelnen Einzelführungsrahmen 8 bis 10 in ihrer Längserstreckung gesehen, in Summe in etwa die Länge des Basisrahmens 4 auf. Selbstverständlich ist es aber auch möglich, anstatt der hier dargestellten drei gezeigten Einzelführungsrahmen 8 bis 10 jede beliebige Anzahl derselben zur Bildung der Einzelraupe 1 einzusetzen. Auch ist die Anzahl der verwendeten Verstellantriebe 11 nicht an die hier gezeigten Ausführungsformen gebunden, wobei wiederum jede beliebige Anzahl von Verstellantrieben 11 den Einzelführungsrahmen 8 bis 10 zuordenbar ist.

Um nun zumindest ein Abziehen des hier dargestellten Bauteils 3 nach seiner Herstellung, ausgehend von einem Extruder und den daran anschließenden Kalibrier- sowie Kühleinrichtungen, zu gewährleisten, ist der hier gezeigten Einzelraupe 1 an der von dieser abgewendeten Seite des Bauteils 3 eine weitere Raupe 42 zugeordnet, welche nur schematisch angedeutet, sowie stark vereinfacht dargestellt worden ist. Bei dem hier dargestellten Ausführungsbeispiel bildet die Raupe 42 die Unterraupe und die Einzelraupe 1 die Oberraupe für den Abzug des Bauteils 3 aus der Extrusionsanlage.

Zur Vermeidung eines Verzuges des Bauteils 3 während der Abzugsbewegung ist es vorteilhaft, wenn die hier dargestellte Raupe 42 mit ihrer dem Bauteil 3'zugewandten Seite höhenmäßig auf die Profilkontur, ausgehend vom Extrusionswerkzeug, eingerichtet wird, worauf mittels des Schwenkarmes 6 die gesamte Einzelraupe 1, gemäß einem eingetragenen Doppelpfeil 43, in Bezug zum extrudierten Bauteil 3 bzw. Profil und mit Berücksichtigung des Verstellweges der Verstellantriebe 11 dazu ausgerichtet wird.

Wie aus der Darstellung in der Fig. 2 zu ersehen ist, weist der hindurchzuführende Bauteil 3 über die Längserstreckung der Einzelraupe 1 gesehen eine unterschiedliche Dicke auf, wie dies am Extrusionsbeginn möglich ist, wodurch sich eine unterschiedliche Verlagerung der Einzelführungsrahmen 8 bis 10 gegenüber dem Basisrahmen 4 mittels der Verstellantriebe 11 einstellt. Die gesamte Grundeinstellung der Einzelraupe 1 erfolgt wiederum durch den Schwenkarm 6 in Bezug zum Grundrahmen 7. Die weitere unterschiedliche Verlagerung der Einzelführungsrahmen 8 bis 10 erfolgt durch den diesen zugeordneten Verstellantrieb 11 im Bezug zum Basisrahmen 4. Diese Verlagerung der Einzelführungsrahmen 8 bis 10 gegenüber dem Basisrahmen 4 ist speziell bei der Extrusion von mehreren bevorzugt nebeneinander angeordneten Bauteilen 3, wie beispielsweise Profilen, von Vorteil. Dadurch ist es möglich, jedem der Bauteile 3 die ihm notwendige Andrückkraft zur Erzielung der Abzugskraft zuzuordnen, ohne daß dabei einer der Bauteile 3 überlastet bzw. gar nicht abgezogen wird.

Weiters kann es sich als vorteilhaft erweisen, wenn zumindest einer der Einzelführungsrahmen 8 bis 10 im Bereich seiner beiden in Bewegungsrichtung voneinander distanzierten Endbereiche 12 bis 17 über einen eigenen Verstellantrieb 11 in seiner Distanz gegenüber dem Basisrahmen festlegbar ist. Durch diese Festlegung der Distanz ist weiters auch möglich, daß die Verstellantriebe 11 von mehreren Einzelführungsrahmen 8 bis 10 zur Aufbringung einer gleichen bzw. gleichmäßigen Andrückkraft auf den hindurchbewegten Bauteil 3 festlegbar bzw. ausgebildet sind.

In der Fig. 3 ist eine mögliche und gegebenenfalls für sich eigenständige Ausführungsform der Abzugsvorrichtung 2 gezeigt, bei welcher eine Oberraupe 44 aus zwei in Abzugsrichtung bzw. Bewegungsrichtung des Bauteils 3 parallel nebeneinander angeordneten Einzelraupen 1, welche getrennt voneinander mittels der Verstellantriebe 11 relativ zu diesem gehalten bzw. geführt sind, gebildet ist. Die in den Fig. 1 und 2 schematisch angedeutete Raupe 42 bildet bei diesem Ausführungsbeispiel eine Unterraupe 45, welche den beiden Einzelraupen 1 der Oberraupe 44 zugeordnet ist und zur Aufbringung der notwendigen Andrückkraft auf den Bauteil 3 und der damit verbundenen Abzugskraft dient. Die Ausbildung der Unterraupe 45 kann durch jede aus dem Stand der Technik bekannte Art und Weise erfolgen und ist, wie dies schematisch angedeutet ist, am Grundrahmen 7 bedarfsweise verstellbar gehaltert bzw. gelagert.

Die Unterraupe 45 kann aus einem Tragrahmen 46, wie beispielsweise einem gekanteten Blechrahmen, einem Hohlprofil bzw. Winkelprofil oder dgl., gebildet sein. Weiters ist es vorteilhaft, sowohl auf der dem Bauteil 3 zugewandten Seite als auch auf der davon abgewandten Seite des Tragrahmens 46 wiederum eigene Führungselemente 33, wie beispielsweise die Führungsleisten 34, zur Abstützung des Fördermittels 28, insbesondere des endlos ausgebildeten Führungsorgans 29, zu dessen Führung bzw. Abstützung anzuordnen. Am Förderorgan 29, welches beispielsweise durch eine Gliederkette oder Rundkette gebildet ist, können Stollen 47 gehaltert bzw. befestigt sein, welche während der Abzugsbewegung in Kontakt mit dem durch die Abzugsvorrichtung 2 hindurchzubewegenden Bauteil 3 kommen.

Wie bereits zuvor beschrieben und hier besser zu ersehen, ist der Basisrahmen 4 der Oberraupe 44 über die Lagervorrichtungen 5 an, in Abzugsrichtung gesehen, beidseits des Grundrahmens 7 angeordneten Schwenkarmen 6 relativ zum Grundrahmen 7 bedarfsweise verstellbar gelagert bzw. gehaltert. Um diese relative Verstellbewegung durchführen zu können, ist jedem der Schwenkarme 6 eine weitere Lagervorrichtung 48 im Bereich des Grundrahmens 7 zugeordnet, wodurch es in Art eines Hebelprinzipes möglich ist, die gewünschte Verstellbewegung bzw. Arretierung der Oberraupe 44 in Bezug zum Grundrahmcn 7 bzw. der Unterraupe 45 zu ermöglichen. Die Verstellung des Schwenkarmes 6 kann durch jede aus dem Stand der Technik bekannte Art und Weise erfolgen und ist frei wählbar.

Die jedem Schwenkarm 6 zugeordneten Lagervorrichtungen 5, 48 weisen jeweils Schwenkachsen auf, die einerseits rechtwinkelig zur Abzugsrichtung der Bauteile 3 sowie parallel zu den Achsen der Umlenkrollen 25, 26 ausgerichtet sind.

Wie weiters aus dieser Darstellung zu ersehen ist, sind zwei, in Abzugsrichtung gesehen, parallel nebeneinander angeordnete Bauteile 3 mittels der Oberraupe 44 sowie der Unterraupe 45 durch diese hindurchzuführen.

Um gerade während des Anfahrvorganges der Bauteile 3 für beide Bauteile 3 eine gleichmäßige Andrückkraft und die damit verbundene Abzugskraft zu erzielen, ist dargestellt, daß der links angeordnete Bauteil 3 bereits seine volle Höhe 49 aufweist, wobei hingegen der rechts dargestellte Bauteil 3 noch eine geringere Höhe 50 aufweist. Bedingt durch diese unterschiedlichen Höhen 49, 50 bildet sich zwischen diesen eine Höhendifferenz 51 aus, welche nun im Bezug zu einer im Bereich der Stollen 47 der Unterraupe 45 auf der den Bauteilen 3 zugewandten Seite verlaufenden Ebene 52 durch die die Oberraupe 44 bildenden Einzelraupen 1, sowie deren zugeordneten Verstellantriebe 11 relativ zum Basisrahmen 4, auszugleichen ist.

Diese relative Verstellung der Einzelraupen 1 in Bezug zum Basisrahmen 4 erfolgt durch die zwischen dem Basisrahmen 4 und den Einzelführungsrahmen 8 bis 10 angeordneten Verstellantriebe 11, wie dies bereits zuvor detailliert beschrieben worden ist. Durch die parallele Anordnung der beiden Einzelraupen 1 und der bedarfsweise zentralen Versorgung der Verstellantriebe 11 mit dem unter gleichem Druck stehenden Medium 21, ist jeder der beiden Bauteile 3 gegenüber der Unterraupe 45 mit der gleichen Andrückkraft beaufschlagt, wodurch wiederum für beide Bauteile 3 eine gleiche Abzugskraft in Bewegungsrichtung derselben erzielbar ist. Selbstverständlich können aber auch die Verstellantriebe 11 der beiden Einzelraupen 1 untereinander in Leitungsverbindung stehen.

Wie weiters aus dieser Darstellung zu ersehen ist, weisen die Stollen 47 der Unterraupe 45 quer zur Abzugs- bzw. Bewegungsrichtung der Bauteile 3 gesehen eine Breite 53 auf, welche zumindest der Summe von Breiten 54, 55 von Stollen 56, 57 der beiden die Oberraupe 44 bildenden Einzelraupen 1 entspricht. Dabei ist es aber selbstverständlich auch möglich, die Breiten 54, 55 der Stollen 56, 57 der beiden Einzelraupen 1 der Oberraupe 44 zueinander unterschiedlich auszubilden, wobei dies von der Anzahl der Bauteile 3 sowie deren Abmessungen bzw. der Anordnung zu den Bauteilen 3 abhängig ist. Weiters kann aber auch die Breite 53 der Unterraupe 45 in etwa einer Breite 54, 55 der Stollen 56, 57 der Oberraupe 44 entsprechen. Selbstverständlich sind aber die einzelnen Breiten 53, 54, 55 der Stollen 47, 56, 57 zueinander frei wählbar.

Es ist aber selbstverständlich auch möglich, die hier dargestellte Unterraupe 45 auch als Einzelraupe 1, gemäß der detaillierten Beschreibung in den Fig. 1 und 2, auszubilden. Selbstverständlich ist die Anzahl der die Oberraupe 44 bzw. die Unterraupe 45 bildenden Einzelraupen 1 von der Anzahl der abzuziehenden Bauteile 3 abhängig und kann frei gewählt werden. Die Anordnung bzw. Ausbildung der Einzelführungsrahmen 8 bis 10, der Verstellantriebe 11, der Umlenkvorrichtungen 23, 24, des Antriebes 27, der die Fördermittel 28 bildenden Förderorgane 29 sowie die diesen zugeordneten Führungselemente 33, wie beispielsweise Führungsleisten 34, der Abstützrollen 35 sowie der über die Distanzstücke 41 gegenüber den Einzelführungsrahmen 8 bis 10 distanzierten Führungsorgane 40 kann, gemäß der Beschreibung der Fig. 1 und 2, erfolgen.

In der Fig. 4 ist eine weitere mögliche und gegebenenfalls für sich eigenständige Ausbildung der Abzugsvorrichtung 2 gezeigt, wobei wiederum für gleiche Teile gleiche Bezugszeichen wie in den Fig. 1 bis 3 verwendet werden. Um unnötige Wiederholungen zu vermeiden, wird für die Ausbildung einzelner gleich bezeichneter Bauteile auf die detaillierte Beschreibung in den Fig. 1 bis 3 hingewiesen bzw. Bezug genommen.

Die Oberraupe 44 ist wiederum aus den beiden nebeneinander sowie parallel zueinander angeordneten Einzelraupen 1 gebildet, welche gegenüber dem gemeinsamen Basisrahmen 4 mittels der Verstellantriebe 11 relativ zu diesem, jedoch bevorzugt unabhängig voneinander, verstellbar sind. Die Verstellung des Basisrahmens 4 gegenüber dem Grundrahmen 7 erfolgt mittels der zuvor bereits detailliert beschriebenen Schwenkarme 6.

Bei dem hier dargestellten Ausführungsbeispiel ist auch die Unterraupe 45 aus zwei zueinander parallel, sowie nebeneinander angeordneten Einzelraupen 1 gebildet, welche wiederum in einem eigenen Basisrahmen 4 bevorzugt unabhängig voneinander relativ zu diesem verstellbar gelagert sind, wobei dieser Basisrahmen 4 der Unterraupe 45 am Grundrahmen 7 bedarfsweise verstellbar gelagert bzw. gehaltert ist, um eine höhenmäßige Ausrichtung der dem Bauteil 3 zugewandten Seite der Stollen 56, 57 in Bezug zur Extrusionsdüse zu ermöglichen. Die hier gezeigten Stollen 56, 57 der einzelnen Einzelraupen 1 weisen quer zur Extrusionsrichtung bzw. Abzugsrichtung gesehen jeweils die gleichen Breiten auf. Es ist aber selbstverständlich auch eine Variation der einzelnen Breiten zueinander möglich.

Der hier dargestellte Bauteil 3 ist als Hohlprofil ausgebildet und ist in seiner Querschnittsform nur beispielhaft für eine Vielzahl von möglichen Querschnittsformen der Bauteile 3 gewählt. Diese Ausbildung und Anordnung der Oberraupe 44 mit ihren beiden Einzelraupen 1 sowie der Unterraupe 45 mit ihren beiden Einzelraupen 1 dient vor allem dazu, den hier dargestellten Bauteil 3, über seinen Querschnitt gesehen, jeweils mit einer gleichmäßigen Andrückkraft und der damit verbundenen Abzugskraft zu beaufschlagen, um einen Verzug desselben zu vermeiden.

Bei all den zuvor beschriebenen Ausführungsformen der Abzugsvorrichtungen 2 kann der Antrieb der einzelnen Raupen auf unterschiedlichste Art und Weise erfolgen. So ist es beispielsweise möglich, jeder einzelnen der Einzelraupen 1 einen eigenen unabhängigen, steuerbaren Antrieb 27 zuzuordnen, bzw. mit diesem zu kuppeln. Weiters ist es aber auch möglich, daß mehreren Einzelraupen 1 ein gemeinsamer Antrieb 27 zugeordnet ist, wodurch sich zusätzlich noch eine gleichmäßige Abzugsgeschwindigkeit von mehreren Bauteilen 3 erzielen läßt.

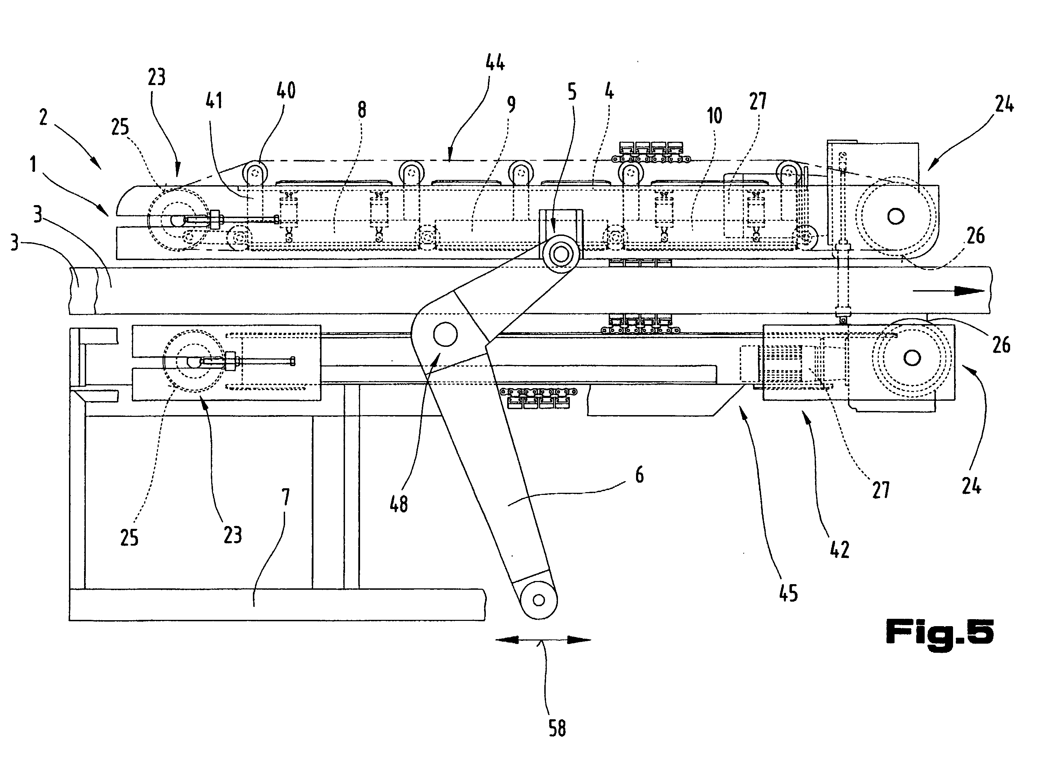

In der Fig. 5 ist eine weitere mögliche und gegebenfalls für sich eigenständige Anordnung der die Abzugsvorrichtung 2 bildenden Oberraupe 44 bzw. Unterraupe 45 gezeigt, wobei wiederum für gleiche Teile gleiche Bezugszeichen wie in den Fig. 1 bis 4 verwendet werden.

Dabei ist die Oberraupe 44 bzw. deren Basisrahmen 4 mittels der Schwenkarme 6 gegenüber dem Grundrahmen 7 in seiner Lage bedarfsweise verstellbar gehaltert. Zwischen dem Basisrahmen 4 und einem Hebelarm des Schwenkarmes 6 ist wiederum die Lagervorrichtung 5, sowie zwischen dem Grundrahmen 7 und einem weiteren Bereich des Schwenkarmes 6 die weitere Lagervorrichtung 48 angeordnet. Durch einen nicht näher dargestellten Verstellantrieb ist es möglich, die Schwenkarme 6 auf der von der Lagervorrichtung 5 abgewendeten Seite gemäß einem Doppelpfeil 58 zu verstellen, wodurch sich die Distanz bzw. der Abstand zwischen den einander zugewandten Raupen, nämlich der Oberraupe 44 und der Unterraupe 45 auf den bzw. die Bauteile 3 einjustieren läßt.

An beiden voneinander in Abzugsrichtung distanzierten Endbereichen der Oberraupe 44 bzw. der Unterraupe 45, sind die Umlenkvorrichtungen 23 bzw. 24 mit ihren Umlenkrollen 25, 26 angeordnet. Den beiden Unlenkvorrichtungen 23, 24 kann zumindest ein Antrieb 27 zugeordnet sein, welcher das endlose Förderorgan 29 jeder Einzelraupe 1 bzw. Raupe 42 in Bewegung versetzt.

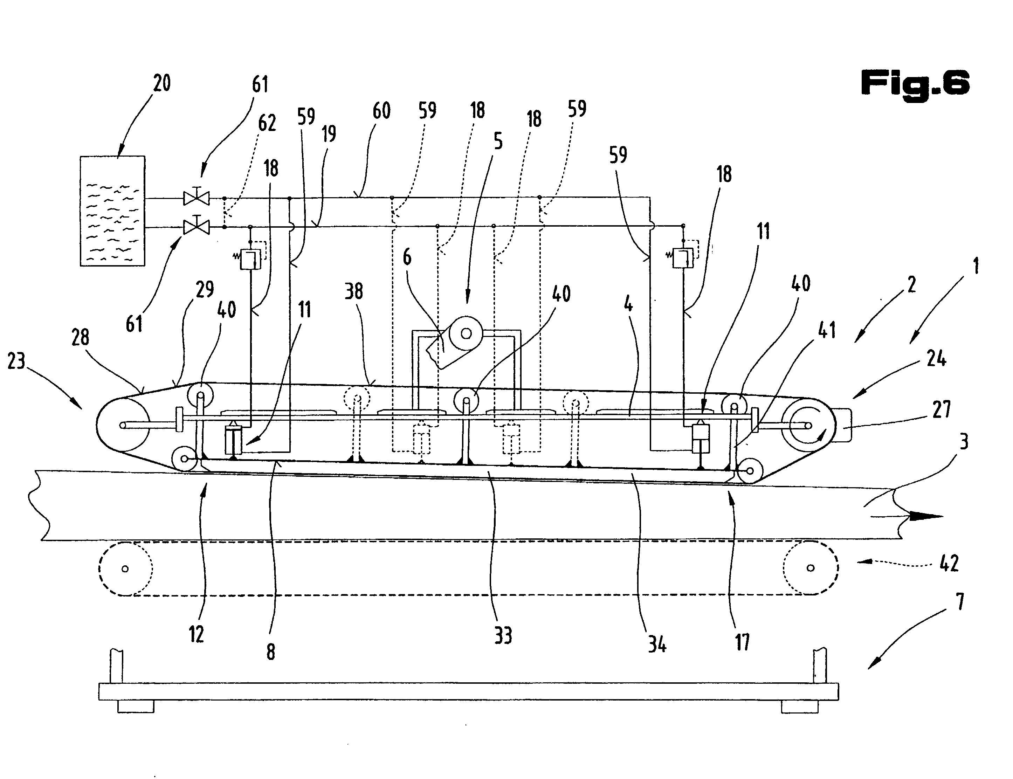

In der Fig. 6 ist eine weitere Einzelraupe 1 der Abzugsvorrichtung 2 zur Bewegung des länglich ausgebildeten Bauteils 3 relativ gegenüber dem Basisrahmen 4 gezeigt, wobei diese hier beschriebene Ausbildung ähnlich der in den Fig. 1 und 2 gezeigten und beschriebenen Einzelraupe 1 is und deshalb für gleiche Teile gleiche Bezugszeichen, wie in diesen Figuren verwendet werden. Ebenfalls wird, um unnötige Wiederholungen zu vermeiden, auf die detaillierte Beschreibung der einzelnen Bauteile in den vorangegangenen Figuren hingewiesen bzw. Bezug genommen.

Bei der hier beschriebenen Ausführungsform der Abzugsvorrichtung 2 ist der Basisrahmen 4 der Einzelraupe 1, mittels des vereinfacht und schematisch angedeuteten Schwenkarms 6, in Bezug zum Grundrahmen 7 zusätzlich relativ verstellbar gelagert, wobei zwischen dem Schwenkarm 6 und dem Basisrahmen 4 die Lagervorrichtung 5 zur schwenkbaren Halterung des Basisrahmens 4 in Bezug zum Grundrahmen 7 angeordnet ist. Weiters umfaßt die Einzelraupe 1 die beiden, in Abzugsrichtung voneinander distanzierten Umlenkvorrichtungen 23, 24, wobei wiederum einer der beiden, bei dem hier vorliegenden Ausführungsbeispiel der Umlenkvorrichtung 24, der Antrieb 27 zur Bewegung des durch das Förderorgan 29 gebildeten Fördermittels 28 zugeordnet ist. Weiters ist bei diesem Ausführungsbeispiel gezeigt, daß gegenüber dem Basisrahmen 4 lediglich ein einziger Einzelführungsrahmen 8 mittels der Verstellantriebe 11 gegenüber dem Basisrahmen 4, zumindest in zur Bewegungsrichtung des Bauteils 3 senkrechter Richtung, selbsttätig einstellbar gelagert ist, wodurch es wiederum möglich ist, durch die druckbeaufschlagten Verstellantriebe 11 mit dem Einzelführungsrahmen 8 über dessen Längserstreckung eine gleichmäßige Andrückkraft auf den hindurchbewegten Bauteil 3 aufzubringen. Die hier dargestellten Verstellantriebe 11 sind hier als doppelt wirkende Zylinder ausgebildet, wobei diese bevorzugt in den den Umlenkvorrichtungen 23, 24 zugewandten Endbereichen 12, 17 des Einzelführungsrahmens 8 angeordnet sind. Weitere Verstellantriebe 11 können über die Längserstreckung des Einzelführungsrahmens 8 beliebig verteilt angeordnet sein, wie dies in strichlierten Linien schematisch angedeutet ist und wodurch eine noch bessere und feinfühligere Druckaufbringung auf den abzuziehenden Bauteil 3 aufzubringen ist. An der dem Bauteil 3 zugewandten Seite des Einzelführungsrahmens 8 ist wiederum das Führungselement 33 in Form der Führungsleiste 34 zur Abstützung des Förderorgans 29 angeordnet.

Weiters ist hier, im Gegensatz zu den zuvor beschriebenen Ausführungsformen, gezeigt, daß die beiden Umlenkvorrichtungen 23, 24 am Basisrahmen 4 und nicht am Einzelführungsrahmen 8 gehaltert sind. Auf die Darstellung von Verstell- bzw. Spannvorrichtungen der Umlenkvorrichtungen 23, 24 in Bezug zum Basisrahmen 4 wurde der besseren Übersichtlichkeit halber verzichtet. Dabei sind bei der Anordnung der Umlenkvorrichtungen 23, 24 höhenmäßig gesehen die minimalen bzw. maximalen Verstellwege der Verstellantriebe und der damit verbunden Verlagerung des Einzelführungsrahmens 8 im Bezug zum Basisrahmen 4 zu berücksichtigen, um in den beiden Endlagenstellungen der Verstellantriebe negative Ablenkwinkel des Förderorgans 29 hin zu den Umlenkvorrichtungen 23, 24 zu vermeiden, um so ein Abheben desselben von den Führungselementen 33 sicher zu verhindern. Zur Vermeidung von zusätzlichen Spanneinrichtungen für das Förderorgan 29 sind auf der vom Einzelführungsrahmen 8 abgewandten Seite des Basisrahmens 4 die Führungsorgane 40 über die Distanzstücke 41 in einem konstanten Abstand vom hier durchlaufend ausgebildeten Einzelführungsrahmen 8 gehaltert. Dadurch wird der Leertrum 38 in etwa parallel und gegebenenfalls mit einem entsprechenden Durchhang zum Einzelführungsrahmen 8 zwischen den Führungsorganen 40 geführt.

Die hier dargestellten Verstellantriebe 11 sind bei diesem Ausführungsbeispiel als doppelt wirkende Zylinder ausgebildet, wobei die jeweils kolbenseitig angeordneten Zylinderkammern über die Verbindungsleitungen 18 mit der gemeinsamen Verteilleitung 19 an der Druckquelle 20 angeschlossen sind. Selbstverständlich ist es auch hier wiederum möglich, Druckminder- bzw. Druckbegrenzungsventile in den Verbindungsleitungen 18 bzw. der Verteilleitung 19 anzuordnen. Die jeweils kolbenstangenseitig angeordneten Zylinderkammern der Verstellantriebe 11 sind über eigene Verbindungsleitungen 59 an einer weiteren gemeinsamen Verteilleitung 60 angeschlossen, welche wiederum mit der Druckquelle 20 verbunden sein kann. Auch hier ist die Anordnung von Druckminder- bzw. Druckbegrenzungsventilen möglich. Zusätzlich ist hier gezeigt, daß in den beiden Verteilleitungen 19, 60 zwischen den Verbindungsleitungen 18, 59 sowie der Druckquelle 20 je ein eigenes Absperrorgan 61 angeordnet sein kann. Diese Absperrorgane 61 dienen beispielsweise dazu, nach der Befüllung der einzelnen Leitungen mit dem Druckmedium aus der Druckquelle 20, diese nach Erreichen eines bestimmten, vorgewählten Druckniveaus von der Druckquelle 20 zu trennen und durch ein bedarfsweises Zwischenschalten einer eigenen Ausgleichsleitung 62 zwischen den beiden Verteilleitungen 19, 60 eine Verbindung herzustellen, wodurch eine Art Ringleitung zwischen den jeweiligen Zylinderkammern der einzelnen Verstellantriebe 11 geschaffen wird. Dadurch ist ein volumenmäßiger Ausgleich des unter Druck stehenden Mediums bei einer Verlagerung des Einzelführungsrahmens 8 in Bezug zum Basisrahmen 4 unter Beibehaltung eines bevorzugt gleichen Druckniveaus gewährleistet.

Der hier dargestellten Einzelraupe 1 ist zum Abziehen des Bauteils 3 nach seiner Herstellung an der von dieser abgewendeten Seite des Bauteils 3 die weitere Raupe 42 zugeordnet, welche nur schematisch angedeutet sowie stark vereinfacht dargestellt worden ist. Bei dem hier dargestellten Ausführungsbeispiel bildet wiederum die Raupe 42 die Unterraupe und die Einzelraupe 1 die Oberraupe für den Abzug des Bauteils 3 aus der Extrusionsanlage.

Um eine bessere Übersichtlichkeit in dieser Darstellung zu gewährleisten, wurde auf die detaillierte Darstellung von Antrieben, Getrieben, sowie diversen Spannvorrichtungen, Abdeckungen sowie diversen Versorgungs- bzw. Steuerleitungen verzichtet. Sebstverständlich ist es möglich, für die hier nicht näher dargestellten Anlagenteile jegliche aus dem Stand der Technik bekannten Bauteile zu verwenden bzw. einzusetzen.

Selbstverständlich ist es aber auch möglich, die Anordnung der Einzelraupen 1, ausgehend von den in den Fig. 1 bis 6 beschriebenen Ausführungsformen, beliebig zu wählen bzw. beliebig miteinander zu kombinieren, um dem Bauteil 3 bzw. den Bauteilen 3 jeweils eine über die Eingriffslänge der Raupen gesehen gleiche bzw. gleichmäßige Andrückkraft zuzuordnen. Selbstverständlich wäre es aber auch möglich, die Ober- bzw. Unterraupe 44, 45 nicht wie hier dargestellt übereinander, sondern jeweils seitlich des bzw. der Bauteile 3 anzuordnen.

Weiters ist es aber auch möglich, bei einer Mehrfachanordnung von Einzelraupen 1, bei der Ober- bzw. Unterraupe 44, 45, die Zylinderkammern der einzelnen Verstellantriebe 11 der Oberraupe 44 und/oder der Unterraupe 45 jeweils miteinander zu verbinden. Zusätzlich können aber auch die Verstellantriebe 11 der Oberraupe 44 und/oder der Unterraupe 45 mit dem hier nicht näher dargestellten Verstellantrieb des Schwenkarmes 6 verbunden sein. Dadurch kann bei Verwendung eines gleichen Druckmediums sowie bei gleichem Druck, eine höhere Verstellkraft der Zylinder der Verstellantriebe 11 gegenüber dem Verstellantrieb des Schwenkarms 6 erzielt werden. Dadurch wird ein Abheben des Basisrahmens 4 gegenüber dem Grundrahmen 7 erzielt. Als vorteilhaft kann es sich aber auch erweisen, wenn bei der Verwendung von doppelt wirkenden Zylindern beide Zylinderkammern mit einem höheren, jedoch bevorzugt zueinander unterschiedlichen Druck beaufschlagt werden, um so die Reaktionszeit bzw. Ansprechzeit des Gesamtsystems zu verbessern.

Abschließend sei darauf hingewiesen, daß in den zuvor beschriebenen Ausführungsbeispielen einzelne Teile unproportional vergrößert dargestellt wurden, um das Verständnis der erfindungsgemäßen Lösung zu verbessern. Des weiteren können auch einzelne Teile der zuvor beschriebenen Merkmalskombinationen der einzelnen Ausführungsbeispiele in Verbindung mit anderen Einzelmerkmalen aus anderen Ausführungsbeispielen, eigenständige, erfindungsgemäße Lösungen bilden.

Vor allem können die einzelnen in den Fig. 1, 2; 3; 4; 5; 6 gezeigten Ausführungen den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Einzelraupe
- 2: Abzugsvorrichtung
- 3: Bauteil
- 4: Basisrahmen
- 5: Lagervorrichtung

- 6: Schwenkarm
- 7: Grundrahmen
- 8: Einzelführungsrahmen
- 9: Einzelführungsrahmen
- 10: Einzelführungsrahmen

- 11: Verstellantrieb
- 12: Endbereich
- 13: Endbereich
- 14: Endbereich
- 15: Endbereich

- 16: Endbereich
- 17: Endbereich
- 18: Verbindungsleitung
- 19: Verteilleitung
- 20: Druckquelle

- 21: Medium
- 22: Überdruckventil
- 23: Umlenkvorrichtung
- 24: Umlenkvorrichtung
- 25: Umlenkrolle

- 26: Umlenkrolle
- 27: Antrieb
- 28: Fördermittel
- 29: Förderorgan
- 30: Achse

- 31: Gelenkanordnung
- 32: Schwenkgelenk
- 33: Führungselement
- 34: Führungsleiste
- 35: Abstützrolle

- 36: Haltearm
- 37: Pfeil
- 38: Leertrum
- 39: Abstand
- 40: Führungsorgan

- 41: Distanzstück
- 42: Raupe
- 43: Doppelpfeil
- 44: Oberraupe
- 45: Unterraupe

- 46: Tragrahmen
- 47: Stollen
- 48: Lagervorrichtung
- 49: Höhe
- 50: Höhe

- 51: Höhendifferenz
- 52: Ebene
- 53: Breite
- 54: Breite
- 55: Breite

- 56: Stollen
- 57: Stollen
- 58: Doppelpfeil
- 59: Verbindungsleitung
- 60: Verteilleitung

- 61: Absperrorgan
- 62: Ausgleichsleitung

## Patentansprüche

1. Abzugsvorrichtung für längliche Bauteile (3), mit einem Grundrahmen (7) und mit einer an diesem abgestützten Oberraupe (44) und Unterraupe (45), mit jeweils Fördermittel (28), welche durch endlos umlaufende Förderorgane (29) gebildet sind, welchen jeweils zwei voneinander distanzierte Umlenkrollen (25, 26) zugeordnet sind und mit mehreren dem Fördermittel (28) zugeordneten sowie hintereinander angeordneten Einzelführungsrahmen (8 bis 10) und mit Führungselementen (33), die am Einzelführungsrahmen (8 bis 10) angeordnet sind, wobei die Umlenkrollen (25, 26) für das Förderorgan (29) die Einzelführungsrahmen (8 bis 10) zwischen sich einschließen und mit zumindest einem der Einzelführungsrahmen (8 bis 10) zugeordneten Verstellantrieb (11), **dadurch gekennzeichnet, daß** die Oberraupe (44) und/oder die Unterraupe (45) aus mehreren parallel zueinander verlaufenden Einzelraupen (1) gebildet ist, welche auf einem gemeinsamen Basisrahmen (4) angeordnet sind, und jede der Einzelraupen (1) die Einzelführungsrahmen (8 bis 10) mit den Führungselementen (33) umfaßt und zumindest einer der Einzelführungsrahmen (8 bis 10) von jeder der Einzelraupen (1) in zumindest einem seiner beiden voneinander distanzierten und den Umlenkrollen (25, 26) zugewandten Endbereiche (12 bis 17) über den Verstellantrieb (11) in seiner Distanz unabhängig von der parallelen Einzelraupe (1) gegenüber dem Basisrahmen (4) zumindest in zur Bewegungsrichtung des Bauteils (3) senkrechter Richtung selbsttätig einstellbar gelagert ist und die Verstellantriebe (11) zur Aufbringung einer gleichen Andrückkraft auf den hindurchbewegten Bauteil (3) ausgebildet sind und daß die unmittelbar hintereinander angeordneten Einzelführungsrahmen (8 bis 10) in ihren Endbereichen (13 bis 15) um eine die den Verstellantrieb (11) aufnehmende Ebene senkrechte Achse (30) aufweisende Gelenkanordnung (31) miteinander verbunden sind.

2. Abzugsvorrichtung nach Anspruch 1, **dadurch gekennzeichnet, daß** zumindest einer der Einzelführungsrahmen (8 bis 10) im Bereich seiner beiden in Bewegungsrichtung voneinander distanzierten Endbereiche (12 bis 17) über je einen Verstellantrieb (11) in seiner Distanz gegenüber dem Basisrahmen (4) festlegbar ist.

3. Abzugsvorrichtung nach Anspruch 1 oder 2, **dadurch gekennzeichnet, daß** im Bereich der Gelenkanordnung (31) zumindest eine Abstützrolle (35) für das Förderorgan (29) angeordnet ist.

4. Abzugsvorrichtung nach einem oder mehreren der vorhergehenden Ansprüche, **dadurch gekennzeichnet, daß** am Einzelführungsrahmen (8 bis 10) über zumindest ein Distanzstück (41) ein Führungsorgan (40) für einen Leertrum (38) des Förderorgans (29) angeordnet ist.

5. Abzugsvorrichtung nach einem oder mehreren der vorhergehenden Ansprüche, **dadurch gekennzeichnet, daß** in den den Umlenkrollen (25, 26) zugewandten Endbereichen (12, 17) der Einzelführungsrahmen (8, 10) zumindest eine Abstützrolle (35) angeordnet ist.

6. Abzugsvorrichtung nach einem oder mehreren der vorhergehenden Ansprüche, **dadurch gekennzeichnet, daß** die Führungselemente (33) für das Fördermittel (28) bzw. das Förderorgan auf den Einzelführungsrahmen (8 bis 10) durch Führungsleisten (34) gebildet sind.

7. Abzugsvorrichtung nach einem oder mehreren der vorhergehenden Ansprüche, **dadurch gekennzeichnet, daß** auf der von den Einzelführungsrahmen (8 bis 10) abgewendeten Seite des Basisrahmens (4) weitere Führungselemente (33), z.B. Führungsleisten (34), für den Leertrum (38) des Fördermittels (28) bzw. des Förderorgans (29) angeordnet sind.

8. Abzugsvorrichtung nach einem oder mehreren der vorhergehenden Ansprüche, **dadurch gekennzeichnet, daß** das Förderorgan (29) durch eine Gliederkette oder eine Rundkette gebildet ist.

9. Abzugsvorrichtung nach Anspruch 8, **dadurch gekennzeichnet, daß** einzelne Glieder der Gliederkette durch Stollen (47, *56,* 57) gebildet sind, die über Schwenkgelenke untereinander verbunden sind.

10. Abzugsvorrichtung nach Anspruch 8 oder 9, **dadurch gekennzeichnet, daß** auf einzelnen Gliedern der Gliederkette Stollen (47, 56, 57) angeordnet sind.

11. Abzugsvorrichtung nach einem oder mehreren der vorhergehenden Ansprüche, **dadurch gekennzeichnet, daß** der Verstellantrieb (11) zwischen dem Einzelführungsrahmen (8 bis 10) und dem Basisrahmen (4) durch zumindest eine Zylinder-Kolbenanordnung gebildet ist.

12. Abzugsvorrichtung nach einem oder mehreren der vorhergehenden Ansprüche, **dadurch gekennzeichnet, daß** die im Kraftübertragungsweg zwischen dem Basisrahmen (4) und dem Einzelführungsrahmen (8 bis 10) angeordneten Zylinderkammern der Verstellantriebe (11) mit einem unter gleichem Druck stehenden Medium (21) beaufschlagt sind.

13. Abzugsvorrichtung nach Anspruch 12, **dadurch gekennzeichnet, daß** die Zylinderkammern der Verstellantriebe (11) an einer gemeinsamen Verteilleitung (19, 60) angeschlossen sind.

14. Abzugsvorrichtung nach einem oder mehreren der vorhergehenden Ansprüche, **dadurch gekennzeichnet, daß** im Verstellantrieb (11) bzw. den Verbindungsleitungen (18, 59) zwischen den Verstellantrieben (11) und einer Druckquelle (20) für das Medium (21) ein Überdruckventil (22) angeordnet ist.

15. Abzugsvorrichtung nach Anspruch 13, **dadurch gekennzeichnet, daß** die Verteilleitung (19, 60) unter Zwischenschaltung eines Absperrorgans (61) mit der Druckquelle (20) verbunden ist.

16. Abzugsvorrichtung nach einem oder mehreren der Ansprüche 12, 14 oder 15, **dadurch gekennzeichnet, daß** die Druckquelle (20) des Mediums (21) durch einen Druckspeicher gebildet ist.

17. Abzugsvorrichtung nach Anspruch 9 oder 10, **dadurch gekennzeichnet, daß** eine quer zur Bewegungsrichtung gemessene Breite (53) der Stollen (47) einer der beiden einander zugewandten Raupen zumindest einer Summe der Breiten (54, 55) von zumindest zwei Stollen (56, 57) der die andere Raupe bildenden parallel zueinander angeordneten Einzelraupen (1) entspricht.

18. Abzugsvorrichtung nach einem oder mehreren der vorhergehenden Ansprüche, **dadurch gekennzeichnet, daß** den auf einem gemeinsamen Basisrahmen (4) gelagerten Einzelraupen (1) eine einzige Raupe oder Einzelraupe (1) zugeordnet ist.

19. Abzugsvorrichtung nach einem oder mehreren der vorhergehenden Ansprüche, **dadurch gekennzeichnet, daß** jede der Einzelraupen (1) mit einem eigenen unabhängig steuerbaren Antrieb (27) gekuppelt ist.

20. Abzugsvorrichtung nach einem oder mehreren der Ansprüche 1 bis 18, **dadurch gekennzeichnet, daß** mehreren Einzelraupen (1) ein gemeinsamer Antrieb (27) zugeordnet ist.

21. Abzugsvorrichtung nach einem oder mehreren der vorhergehenden Ansprüche, **dadurch gekennzeichnet, daß** der Basisrahmen (4) auf einem Schwenkarm (6) schwenkbar gelagert ist, dessen Schwenkachse parallel zur Achse der Umlenkrollen (25, 26) ausgerichtet ist, und daß der Schwenkarm (6) am Grundrahmen (7) ebenfalls um eine zur Achse der Umlenkrollen (25, 26) parallele Achse verschwenkbar ist.

22. Abzugsvorrichtung nach einem oder mehreren der vorhergehenden Ansprüche, **dadurch gekennzeichnet, daß** die einzelnen Zylinderkammern der die Oberund/oder Unterraupe (44, 45) bildenden Einzelraupen (1) jeweils miteinander verbunden sind.

## Claims

1. Take-off device for elongate components (3), with an underframe (7) and a top caterpillar (44) and a bottom caterpillar (45) supported thereon, having respective conveyer elements (28) provided in the form of endlessly circulating conveyor elements (29) each co-operating with two guide pulleys (25, 26) arranged at a distance apart from one another, and having several individual guide frames (8 to 10) disposed one after the other co-operating with the conveyor elements (28) with guide elements (33) which are arranged on the individual guide frames (8 to 10), the guide pulleys (25, 26) for the conveyor element (29) enclosing the individual guide frames (8 to 10) between them, and the individual guide frames (8 to 10) being provided with at least one actuator drive (11), **characterised in that** the top caterpillar (44) and/or the bottom caterpillar (45) consists of several individual caterpillars (1) running parallel with one another arranged on a common base frame (4), and each of the individual caterpillars (1) comprises the individual guide frames (8 to 10) with the guide elements (33), and at least one of the individual guide frames (8 to 10) of each of the individual caterpillars (1) is mounted so as to be automatically adjustable in at least one of its two mutually spaced apart end regions (12 to 17) facing the guide pulleys (25, 26) by means of the actuator drive (11), irrespective of the parallel individual caterpillar (1), in terms of its distance relative to the base frame (4), at least in the direction perpendicular to the direction of movement of the component (3), and the actuator drives (11) are designed to apply an identical pressure force to the component (3) as it passes through, the individual guide frames (8 to 10) arranged one immediately after the other being linked to one another at their end regions (13 to 15) about an articulated arrangement (31) having an axis (30) perpendicular to the plane receiving the actuator drive (11).

2. Take-off device as claimed in claim 1, **characterised in that** at least one of the individual guide frames (8 to 10) can be fixed in the region of its two end regions (12 to 17), spaced apart from one another in the direction of movement, by a respective actuator drive (11) in terms of its distance relative to the base frame (4).

3. Take-off device as claimed in claim 1 or 2, **characterised in that** at least one support roller (35) for the conveyor element (29) is provided in the region of the articulated arrangement (31).

4. Take-off device as claimed in one or more of the preceding claims, **characterised in that** a guide element (40) for a slack side (38) of the conveyor element (29) is provided by means of at least one spacer piece (41) on the individual guide frame (8 to 10).

5. Take-off device as claimed in one or more of the preceding claims, **characterised in that** at least one support roller (35) is provided in the end regions (12, 17) of the individual guide frames (8, 10) facing the guide pulleys (25, 26).

6. Take-off device as claimed in one or more of the preceding claims, **characterised in that** the guide elements (33) for the conveyor means (28) or conveyor element on the individual guide frames (8 to 10) are provided in the form of guide strips (34).

7. Take-off device as claimed in one or more of the preceding claims, **characterised in that** other guide elements (33). e.g. guide strips (34), for the slack side (38) of the conveyor means (28) or conveyor element (29), are provided on the side of the base frame (4) remote from the individual guide frames (8 to 10).

8. Take-off device as claimed in one or more of the preceding claims, **characterised in that** the conveyor element (29) is provided in the form of a link chain or a round chain.

9. Take-off device as claimed in claim 8, **characterised in that** individual links of the link chain are provided in the form of cleats (47, 56, 57) linked to one another by pivoting joints.

10. Take-off device as claimed in claim 8 or 9, **characterised in that** cleats (47, 56, 57) are provided on individual links of the link chain.

11. Take-off device as claimed in one or more of the preceding claims, **characterised in that** the actuator drive (11) is provided in the form of at least one cylinder-piston arrangement between the individual guide frames (8 to 10) and the base frame (4).

12. Take-off device as claimed in one or more of the preceding claims, **characterised in that** the cylinder chambers of the actuator drives (11) arranged between the base frame (4) and the individual guide frame (8 to 10) are pressurised by a medium (21) at an identical pressure.

13. Take-off device as claimed in claim 12, **characterised in that** the cylinder chambers of the actuator drives (11) are connected to a common distribution line (19, 60).

14. Take-off device as claimed in one or more of the preceding claims, **characterised in that** a pressure relief valve (22) is provided in the actuator drive (11) or the connecting lines (18, 59) between the actuator drives (11) and a pressure source (20) for the medium (21).

15. Take-off device as claimed in claim 13, **characterised in that** the distribution line (19, 60) is connected to the pressure source (20) with a shut-off element (61) connected in between.

16. Take-off device as claimed in one or more of claims 12, 14 or 15, **characterised in that** the pressure source (20) of the medium (21) is a pressure accumulator.

17. Take-off device as claimed in claim 9 or 10, **characterised in that** a width (53) of the cleat (47) of one of the two mutually facing caterpillars as measured in the direction of movement is at least a sum of the widths (54, 55) of at least two cleats (56, 57) of the mutually parallel individual caterpillars (1) forming the other caterpillar.

18. Take-off device as claimed in one or more of the preceding claims, **characterised in that** a single caterpillar or individual caterpillar (1) co-operates with the individual caterpillars (1) mounted on a common base frame (4).

19. Take-off device as claimed in one or more of the preceding claims, **characterised in that** each of the individual caterpillars (1) is coupled with a separate, independently controllable drive (27).

20. Take-off device as claimed in one or more of claims 1 to 18, **characterised in that** a common drive (27) is assigned to several individual caterpillars (1).

21. Take-off device as claimed in one or more of the preceding claims, **characterised in that** the base frame (4) is pivotably mounted on a pivot arm (6), the pivot axis of which is aligned parallel with the axis of the guide pulleys (25, 26), and the pivot arm (6) is pivotably mounted on the underframe (7), also about an axis parallel with the guide pulleys (25, 26).

22. Take-off device as claimed in one or more of the preceding claims, **characterised in that** the individual cylinder chambers of the individual caterpillars (1) forming the top and/or bottom caterpillar (44, 45) are respectively connected to one another.

## Revendications

1. Dispositif de tirage pour des composants oblongs (3), avec un châssis de base (7) et avec uné chenille supérieure (44) prenant appui sur celui-ci et une chenille inférieure (45), avec respectivement des moyens de convoyage (28) qui sont constitués par des organes de convoyage (29) s'étendant sans fin auxquels sont associés respectivement deux rouleaux de renvoi (25, 26) espacés l'un de l'autre, et avec plusieurs châssis de guidage individuels (8 à 10) associés au moyen de convoyage (28) ainsi que disposés les uns derrière les autres et avec des éléments de guidage (33) qui sont disposés au châssis de guidage individuel (8 à 10), où les rouleaux de renvoi (25, 26) pour l'organe de convoyage (29) enferment les châssis de guidage individuels (8 à 10) entre eux, et avec au moins une commande de déplacement (11) associée aux châssis de guidage individuels (8 à 10), **caractérisé en ce que** la chenille supérieure (44) et/ou la chenille inférieure (45) est formée par plusieurs chenilles individuelles (1) s'étendant parallèlement les unes aux autres, qui sont disposées sur un châssis de base commun (4), et chacune des chenilles individuelles (1) comprend les châssis de guidage individuels (8 à 10) avec les éléments de guidage (33), et au moins l'un des châssis de guidage individuels (8 à 10) de chacune des chenilles individuelles (1) est logé dans au moins l'une de ses deux zones d'extrémité (12 à 17) espacées l'une de l'autre et orientée vers les rouleaux de renvoi (25, 26) par la commande de déplacement (11) dans sa distance indépendamment de la chenille individuelle parallèle (1), par rapport au châssis de base (4) au moins dans la direction perpendiculaire à la direction de déplacement du composant (3) d'une manière ajustable automatiquement, et les commandes de déplacement (11) sont réalisées pour l'application d'une force d'application égale sur le composant traversant (3), et **en ce que** les châssis de guidage individuels (8 à 10) disposés directement les uns derrière les autres sont reliés dans leurs zones d'extrémité (13 à 15) autour d'un agencement d'articulation (31) présentant l'axe (30) perpendiculaire au plan recevant la commande de déplacement (11).

2. Dispositif de tirage selon la revendication 1, **caractérisé en ce qu'**au moins l'un des châssis de guidage individuels (8 à 10) peut être fixé au voisinage de ses deux zones d'extrémité (12 à 17) espacées l'une de l'autre dans la direction de déplacement par respectivement une commande de déplacement (11) dans sa distance par rapport au châssis de base (4).

3. Dispositif de tirage selon la revendication 1 ou 2, **caractérisé en ce qu'**il est disposé au voisinage de l'agencement d'articulation (31) au moins un rouleau d'appui (35) pour l'organe de convoyage (29).

4. Dispositif de tirage selon l'une ou plusieurs des revendications précédentes, **caractérisé en ce qu'**il est disposé au châssis de guidage individuel (8, 10), par au moins une pièce d'espacement (41), un organe de guidage (40) pour un brin vide (38) de l'organe de convoyage (29).

5. Dispositif de tirage selon l'une ou plusieurs des revendications précédentes, **caractérisé en ce qu'**il est disposé dans les zones d'extrémité (12, 17) des châssis de guidage individuels (8 à 10) orientées vers les rouleaux de renvoi (25, 26) au moins un rouleau d'appui (35).

6. Dispositif de tirage selon l'une ou plusieurs des revendications précédentes, **caractérisé en ce que** les éléments de guidage (33) pour le moyen de convoyage (28) respectivement l'organe de convoyage sur les châssis de guidage individuels (8 à 10) sont formés par des baguettes de guidage (34).

7. Dispositif de tirage selon l'une ou plusieurs des revendications précédentes, **caractérisé en ce que** sont disposés sur le côté du châssis de base (4) éloigné des châssis de guidage individuels (8 à 10) d'autres éléments de guidage (33), par exemple des baguettes de guidage (34), pour le brin vide (38) du moyen de convoyage (28) respectivement de l'organe de convoyage (29).

8. Dispositif de tirage selon l'une ou plusieurs des revendications précédentes, **caractérisé en ce que** l'organe de convoyage (29) est formé par une chaîne à maillons ou une chaîne circulaire.

9. Dispositif de tirage selon la revendication 8, **caractérisé en ce que** des maillons individuels de la chaîne à maillons sont formés par des barrettes (47, 56, 57) qui sont reliées entre elles par des articulations pivotantes.

10. Dispositif de tirage selon la revendication 8 ou 9, **caractérisé en ce que** des barrettes (47, 56, 57) sont disposées sur des maillons individuels de la chaîne à maillons.

11. Dispositif de tirage selon l'une ou plusieurs des revendications précédentes, **caractérisé en ce que** la commande de déplacement (11) est formée entre le châssis de guidage individuel (8 à 10) et le châssis de base (4) par au moins un agencement à vérin et à piston.

12. Dispositif de tirage selon l'une ou plusieurs des revendications précédentes, **caractérisé en ce que** les chambres cylindriques des commandes de déplacement (11) disposées dans le chemin de transmission des forces entre le châssis de base (4) et le châssis de guidage individuel (8 à 10) sont chargées en un milieu (21) soumis à la même pression.

13. Dispositif de tirage selon la revendication 12, **caractérisé en ce que** les chambres cylindres des commandes de déplacement (11) sont reliées à un conduit distributeur commun (19, 60).

14. Dispositif de tirage selon l'une ou plusieurs des revendications précédentes, **caractérisé en ce qu'**il est disposé dans la commande de déplacement (11) respectivement entre les lignes de liaison (18, 59) entre les commandes de déplacement (11) et une source de pression (20) pour le milieu (21) une vanne de surpression (22).

15. Dispositif de tirage selon la revendication 13, **caractérisé en ce que** le conduit distributeur (19, 60) est relié à la source de pression (20) en intercalant un organe d'arrêt (61).

16. Dispositif de tirage selon l'une ou plusieurs des revendications 12, 14 ou 15, **caractérisé en ce que** la source de pression (20) du milieu (21) est formée par un accumulateur de pression.

17. Dispositif de tirage selon la revendication 9 ou 10, **caractérisé en ce qu'**une largeur (53) des barrettes (47) mesurée transversalement à la direction de déplacement d'une des deux chenilles orientées l'une vers l'autre correspond au moins à une somme des largeurs (54, 55) d'au moins deux barrettes (56, 57) des chenilles individuelles (1), disposées parallèlement, formant l'autre chenille.

18. Dispositif de tirage selon l'une ou plusieurs des revendications précédentes, **caractérisé en ce qu'**il est associé aux chenilles individuelles (1) logées sur un châssis de base commun (4) une seule chenille ou chenille individuelle (1).

19. Dispositif de tirage selon l'une ou plusieurs des revendications précédentes, **caractérisé en ce que** chacune des chenilles individuelles (1) est couplée à un organe d'entraînement individuel (27) pouvant être commandé indépendamment.

20. Dispositif de tirage selon l'une ou plusieurs des revendications 1 à 18, **caractérisé en ce qu'**un organe d'entraînement commun (27) est associé à plusieurs chenilles individuelles (1).

21. Dispositif de tirage selon l'une ou plusieurs des revendications précédentes, **caractérisé en ce que** le châssis de base (4) est logé d'une manière pivotante sur un bras de pivotement (6) dont l'axe de pivotement est orienté parallèlement à l'axe des rouleaux de renvoi (25, 26), et **en ce que** le bras de pivotement (6) peut être amené à pivoter au châssis de base (7) également autour d'un axe parallèle à l'axe des rouleaux de renvoi (25, 26).

22. ispositif de tirage selon l'une ou plusieurs des revendications précédentes, **caractérisé en ce que** les chambres cylindriques individuelles des chenilles individuelles (1) formant la chenille supérieure et/ou inférieure (44, 45) sont respectivement reliées entre elles.
